# EUROPEAN PATENT SPECIFICATION

(11) **EP 2 907 644 B1**
(45) Date of publication and mention of the grant of the patent: **14.09.2016**
(21) Application number: 15154485.5
(22) Date of filing: 10.02.2015
(51) Int. Cl.: B29C 45/53, B29C 45/54, B29C 45/76

(54) **Injection unit and injection molding method**
Einspritzeinheit und Spritzgussverfahren
Unité d'injection et procédé de moulage par injection

(30) Priority: 17.02.2014 JP 2014027864
(43) Date of publication of application: 19.08.2015
(73) Proprietor: SUMITOMO HEAVY INDUSTRIES, LTD., Tokyo 141-6025 (JP)
(72) Inventor: Amano, Mitsuaki, Chiba-shi, Chiba 263-0001 (JP); Takeuchi, Shigeru, Chiba-shi, Chiba 263-0001 (JP); Nosaka, Hiromichi, Chiba-shi, Chiba 263-0001 (JP)
(74) Representative: Louis Pöhlau Lohrentz

(56) References cited:
- EP-A2- 0 153 075
- GB-A- 1 420 948
- JP-A- 2001 162 650

## Description

### BACKGROUND OF THE INVENTION

### Field of the Invention

The present invention relates to an injection unit and an injection molding method.

### Description of Related Art

A pre-plasticization type injection unit is provided with a first cylinder, a second cylinder to which a molding material is fed from the first cylinder, and a nozzle which injects the molding material which is fed from the second cylinder into a mold unit (refer to, for example, Japanese Unexamined Patent Application Publication No. 2008-238742). A liquid molding material filled into the mold unit is solidified, and thus a molding product is obtained.

In the related art, the amount (the volume, the mass, the flow rate, or the like) of the molding material flowing between the mold unit and the nozzle is sometimes insufficient.

### SUMMARY OF THE INVENTION

The present invention has been made in view of the above-described problem and has a main object to provide an injection unit capable of increasing the amount of a molding material flowing between a mold unit and a nozzle.

In order to solve the above-described problem, according to an aspect of the present invention, there is provided an injection unit including: a first cylinder; a first movable section which moves a molding material in the first cylinder; a first drive section which operates the first movable section; a second cylinder to which the molding material is fed from the first cylinder; a second movable section which moves the molding material in the second cylinder; a second drive section which operates the second movable section; a nozzle which injects the molding material into a mold unit; a switching section which switches a flow direction of the molding material between the first cylinder, the second cylinder, and the nozzle; and a controller which controls the first drive section, the second drive section, and the switching section, wherein the controller opens the switching section to the first cylinder, the second cylinder, and the nozzle and drives the first drive section and the second drive section at the same time, at a predetermined time.

According to the aspect of the present invention, an injection unit capable of increasing the amount of a molding material flowing between a mold unit and a nozzle is provided.

### BRIEF DESCRIPTION OF THE DRAWINGS

Fig. 1 is a diagram showing an injection unit according to an embodiment of the present invention and is a diagram showing a state where a switching section is open to both a screw cylinder and a plunger cylinder and the switching section is closed with respect to a nozzle.
Fig. 2 is a diagram showing the injection unit according to the embodiment of the present invention and is a diagram showing a state where the switching section is open to all of the screw cylinder, the plunger cylinder, and the nozzle.

### DETAILED DESCRIPTION OF THE INVENTION

Hereinafter, a mode for carrying out the present invention will be described with reference to the drawings. In each of the drawings, the same or corresponding configurations are denoted by the same or corresponding reference numerals and the description thereof is omitted. Hereinafter, description will be performed with a direction in which a molding material is fed from a screw cylinder and a plunger cylinder to a switching section being regarded as forwards and the opposite direction being regarded as backwards.

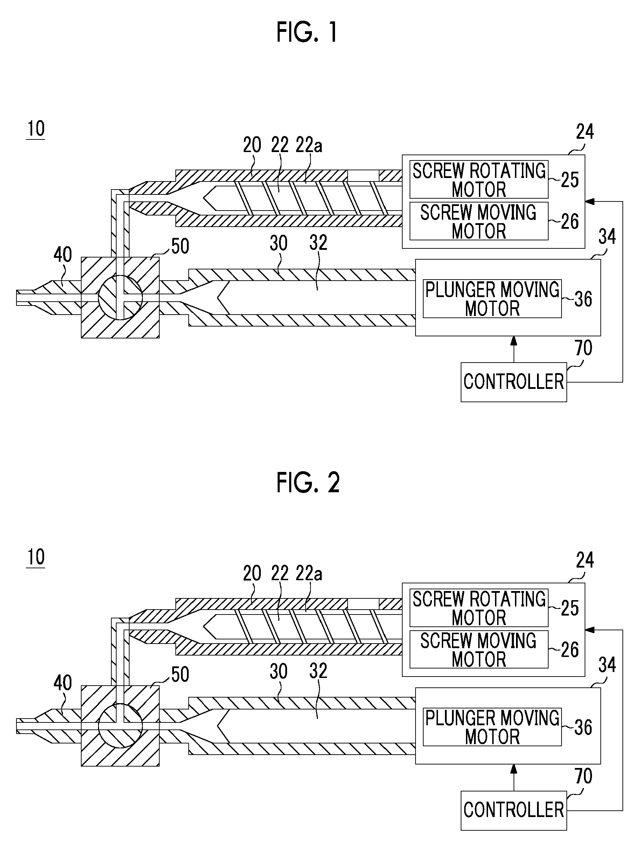

Fig. 1 is a diagram showing an injection unit according to an embodiment of the present invention and is a diagram showing a state where the switching section is open to both the screw cylinder and the plunger cylinder and the switching section is closed with respect to a nozzle. Fig. 2 is a diagram showing the injection unit according to the embodiment of the present invention and is a diagram showing a state where the switching section is open to all of the screw cylinder, the plunger cylinder, and the nozzle.

An injection unit 10 includes a screw cylinder 20, a screw 22, a screw drive section 24, a plunger cylinder 30, a plunger 32, a plunger drive section 34, a nozzle 40, a switching section 50, and a controller 70.

The screw cylinder 20 is a first cylinder to which a molding material is fed from the outside. The molding material may be fed to the first cylinder in either a solid state or a liquid state. However, in this embodiment, the molding material is fed to the first cylinder in a solid state. The screw cylinder 20 heats and melts the molding material. A heat source such as a heater is provided at the outer periphery of the screw cylinder 20.

The screw 22 is a first movable section which is disposed in the screw cylinder 20 and moves the molding material in the screw cylinder 20. The screw 22 may be disposed in the screw cylinder 20 so as to be able to advance and retreat and be able to rotate. In addition, the screw 22 may also be disposed in the screw cylinder 20 so as to be unable to advance and retreat and be able to rotate.

The screw drive section 24 is a first drive section which operates the screw 22. The screw drive section 24 may have a general configuration and has, for example, a screw rotating motor 25 which rotates the screw 22 and a screw moving motor 26 which advances and retreats the screw 22. A motion conversion section which converts the rotational motion of the screw moving motor 26 to the linear motion of the screw 22 may be disposed between the screw moving motor 26 and the screw 22. The motion conversion section is configured with a ball screw or the like.

The plunger cylinder 30 is a second cylinder to which the molding material is fed from the screw cylinder 20. A heat source such as a heater is provided at the outer periphery of the plunger cylinder 30.

The plunger 32 is a second movable section which is disposed in the plunger cylinder 30 and moves the molding material in the plunger cylinder 30. The plunger 32 is disposed in the plunger cylinder 30 so as to be able to advance and retreat.

The plunger drive section 34 is a second drive section which operates the plunger 32. The plunger drive section 34 may have a general configuration and has, for example, a plunger moving motor 36 which advances and retreats the plunger 32. A motion conversion section which converts the rotational motion of the plunger moving motor 36 to the linear motion of the plunger 32 may be disposed between the plunger moving motor 36 and the plunger 32. The motion conversion section is configured with a ball screw or the like.

The nozzle 40 injects the molding material which is fed from the switching section 50 into a mold unit. A liquid molding material filled into the mold unit is solidified, and thus a molding product is obtained.

The switching section 50 switches a flow direction of the molding material between the screw cylinder 20, the plunger cylinder 30, and the nozzle 40. The switching section 50 is configured with, for example, a rotary valve. In addition, the switching section 50 may be configured with a spool valve, and the configuration of the switching section 50 is not particularly limited.

The switching section 50 is switched to a state of being open to both the screw cylinder 20 and the plunger cylinder 30 and closed with respect to the nozzle 40 (refer to Fig. 1) and a state of being open to all of the screw cylinder 20, the plunger cylinder 30, and the nozzle 40 (refer to Fig. 2).

In addition, the states of the switching section 50 are not limited to the state shown in Fig. 1 and the state shown in Fig. 2. For example, the switching section 50 can take a state of being open to both the plunger cylinder 30 and the nozzle 40 and closed with respect to the screw cylinder 20. Further, the switching section 50 can take a state of being open to both the screw cylinder 20 and the nozzle 40 and closed with respect to the plunger cylinder 30.

The controller 70 controls the screw drive section 24, the plunger drive section 34, and the switching section 50. The controller 70 has, for example, a storage section such as a memory, and a CPU, and executes a control program stored in the storage section in the CPU, thereby performing various controls.

For example, the controller 70 opens the switching section 50 to both the screw cylinder 20 and the plunger cylinder 30, as shown in Fig. 1, and drives the screw rotating motor 25, thereby rotating the screw 22 in a predetermined direction. The molding material is gradually melted while being fed forward along a spiral groove 22a of the screw 22. A liquid molding material is accumulated in front of the screw 22, and thus the screw 22 retreats. If the screw 22 retreats to a predetermined position and a predetermined amount of molding material is accumulated in front of the screw 22, the controller 70 stops the screw rotating motor 25.

The controller 70 may apply pressure to the screw 22 by driving the screw moving motor 26 in order to suppress rapid retreat of the screw 22. The controller 70 drives the screwmoving motor 26 such that the pressure of the screw reaches a setting value.

The controller 70 advances the screw 22 by driving the screw moving motor 26 after a predetermined amount of molding material is accumulated in front of the screw 22. In this way, the molding material flows from the screw cylinder 20 into the plunger cylinder 30 through the switching section 50. As a result, the molding material is accumulated in front of the plunger 32, and thus the plunger 32 retreats.

The controller 70 may apply pressure to the plunger 32 by driving the plunger moving motor 36 in order to suppress rapid retreat of the plunger 32. The controller 70 drives the plunger moving motor 36 such that the pressure of the plunger 32 reaches a setting value.

If the plunger 32 retreats to a predetermined position and a predetermined amount of molding material is accumulated in front of the plunger 32, the controller 70 rotates the screw 22 in a predetermined direction by driving the screw rotating motor 25 in order to accumulate the molding material in front of the screw 22 again. The molding material is accumulated in front of the screw 22, and thus the screw 22 retreats.

A predetermined amount of molding material is accumulated in front of each of the screw 22 and the plunger 32. In addition, a process of accumulating the molding material is not limited to the above-described process. For example, the controller 70 may cause the molding material to flow from the screw cylinder 20 into the plunger cylinder 30 through the switching section 50 by feeding forward the molding material along the spiral groove 22a of the screw 22 by rotating the screw 22 with the position of the screw 22 fixed.

After the accumulation of the molding material, a filling process of filling the mold unit with the accumulated molding material is performed. The molding material filled into the mold unit is solidified. A hold pressure process of applying pressure to the molding material in the mold unit in order to prevent insufficient filling such as a sink mark or short-shot due to the solidification of the molding material is performed. Further, a pressure reduction process of reducing pressure on the molding material in the mold unit is sometimes performed.

The controller 70 may open the switching section 50 to all of the screw cylinder 20, the plunger cylinder 30, and the nozzle 40, as shown in Fig. 2, and drive the screw moving motor 26 and the plunger moving motor 36 at the same time, in at least a portion of the filling process. The screw 22 and the plunger 32 are advanced at the same time, and thus the molding material flows at the same time from both the screw cylinder 20 and the plunger cylinder 30 into the nozzle 40 through the switching section 50. Then, the mold material is filled from the nozzle 40 into the mold unit. As compared to a case where the molding material is fed from only the plunger cylinder 30 to the nozzle 40, as in the related art, the amount of the molding material flowing from the nozzle 40 into the mold unit can be increased, and thus a large-size molding product can be molded. Further, in a case where the sizes of molding products are the same, filling speed can be increased, as compared to that in the related art.

In addition, it is favorable if the screw moving motor 26 and the plunger moving motor 36 are driven at the same time in at least a portion of the filling process, and the driving of the screw moving motor 26 and the plunger moving motor 36 may be started or may not be started at the same time and may be ended or may not be ended at the same time. Further, the plunger moving motor 36 and the screw rotating motor 25 may be driven at the same time in at least a portion of the filling process. As described above, by rotating the screw 22 in a predetermined direction, it is possible to feed the molding material in front of the screw 22. Further, the screw rotating motor 25, the screw moving motor 26, and the plunger moving motor 36 may be driven at the same time in at least a portion of the filling process.

Further, the controller 70 may open the switching section 50 to all of the screw cylinder 20, the plunger cylinder 30, and the nozzle 40, as shown in Fig. 2, and drive the screw moving motor 26 and the plunger moving motor 36 at the same time, in at least a portion of the hold pressure process. Pressure can be applied to the molding material in the mold unit by the pressure of the screw 22 and the pressure of the plunger 32. The molding material in an amount corresponding to a shortage due to a sink mark, short-shot, or the like flows at the same time from both the screw cylinder 20 and the plunger cylinder 30 into the nozzle 40 through the switching section 50. The amount of the molding material flowing from the nozzle 40 into the mold unit can be increased, and thus the insufficient filling such as a sink mark or short-shot can be solved.

In addition, it is favorable if the screw moving motor 26 and the plunger moving motor 36 are driven at the same time in at least a portion of the hold pressure process, and the driving of the screw moving motor 26 and the plunger moving motor 36 may be started or may not be started at the same time and may be ended or may not be ended at the same time. Further, the plunger moving motor 36 and the screw rotating motor 25 may be driven at the same time in at least a portion of the hold pressure process. By rotating the screw 22 in a predetermined direction, it is possible to feed the molding material in front of the screw 22. Further, the screw rotating motor 25, the screw moving motor 26, and the plunger moving motor 36 may be driven at the same time in at least a portion of the hold pressure process.

Further, the controller 70 may open the switching section 50 to all of the screw cylinder 20, the plunger cylinder 30, and the nozzle 40, as shown in Fig. 2, and drive the screw moving motor 26 and the plunger moving motor 36 at the same time, in at least a portion of the pressure reduction process. The screw 22 and the plunger 32 are retreated at the same time, and thus the molding material flows from the nozzle 40 into both the screw cylinder 20 and the plunger cylinder 30 at the same time through the switching section 50. The amount of the molding material flowing from the mold unit into the nozzle 40 can be increased, and thus it is easy to reduce pressure on the molding material in the mold unit.

In addition, it is favorable if the screw moving motor 26 and the plunger moving motor 36 are driven at the same time in at least a portion of the pressure reduction process, and the driving of the screw moving motor 26 and the plunger moving motor 36 may be started or may not be started at the same time and may be ended or may not be ended at the same time. Further, the plunger moving motor 36 and the screw rotating motor 25 may be driven at the same time in at least a portion of the pressure reduction process. By rotating the screw 22 in a direction opposite to the predetermined direction, it is possible to cause the molding material to flow back. Further, the screw rotating motor 25, the screw moving motor 26, and the plunger moving motor 36 may be driven at the same time in at least a portion of the pressure reduction process.

In addition, a process of driving the screw drive section 24 and the plunger drive section 34 at the same time may not be performed in all of the filling process, the hold pressure process, and the pressure reduction process and may be performed in at least one of the filling process, the hold pressure process, and the pressure reduction process. Further, the process of driving the screw drive section 24 and the plunger drive section 34 at the same time may be performed in a process other than the filling process, the hold pressure process, and the pressure reduction process.

The embodiment of the injection unit or the like has been described above. However, the present invention is not limited to the embodiment described above, and various modifications and improvements can be made within the scope of the concept of the present invention stated in the appended claims.

For example, the injection unit 10 according to the above-described embodiment is provided in a horizontal injection molding machine in which a mold opening and closing direction is horizontal. However, the injection unit 10 may be provided in a vertical injection molding machine in which a mold opening and closing direction is vertical.

Further, the screw cylinder 20 in the above-described embodiment is parallel to the plunger cylinder 30. However, the screw cylinder 20 may be perpendicular to the plunger cylinder 30 or may also be inclined with respect to the plunger cylinder 30.

Further, in the above-described embodiment, the screw 22 is used as the first movable section. However, a plunger may be used as the first movable section. The plunger as the first movable section may be disposed in the first cylinder so as to be able to advance and retreat.

## Claims

1. An injection unit comprising:
a first cylinder (20);
a first movable section (22) which moves a molding material in the first cylinder (20);
a first drive section (24) which operates the first movable section (22);
a second cylinder (30) to which the molding material is fed from the first cylinder (20);
a second movable section (32) which moves the molding material in the second cylinder (30);
a second drive section (34) which operates the second movable section (32);
a nozzle (40) which injects the molding material into a mold unit;
a switching section (50) configured to switch to a position in which the switching section (5) opens to all of the first cylinder (20), the second cylinder (30), and the nozzle (40) ; and
a controller (70) which controls the first drive section (24), the second drive section (34), and the switching section (50),
**characterized in that** the controller (70) is configured to switch the switching section (50) to said position and to drive the first drive section (24) and the second drive section (34) at the same time, at a predetermined time.

2. The injection unit according to Claim 1, wherein the controller is configured to open the switching section (50) to the first cylinder (20), the second cylinder (30), and the nozzle (40) and to drive the first drive section (24) and the second drive section (34) at the same time, at a predetermined time, such that the molding material is caused to flow at the same time from both the first cylinder (20) and the second cylinder (30) into the nozzle (40) through the switching section (50).

3. The injection unit according to Claim 1 or 2, wherein the controller is configured to open the switching section (50) to the first cylinder (20), the second cylinder (30), and the nozzle (40) and to drive the first drive section (24) and the second drive section (34) at the same time, at a predetermined time, such that the molding material is caused to flow from the nozzle (40) into both the first cylinder (20) and the second cylinder (30) at the same time through the switching section (50).

4. An injection molding method comprising:
opening a switching section (50) configured to switch to a position in which the switching section opens to all of a first cylinder (20), a second cylinder (30) towhichthemoldingmaterial is fed from the first cylinder (20), and a nozzle (40) which injects the molding material to a mold unit;
**characterized by**
driving a first drive section (24) which operates a first movable section (22) which moves the molding material in the first cylinder (20), andaseconddrivesection (34) whichoperates a second movable section (32) which moves the molding material in the second cylinder (30), at the same time.

## Patentansprüche

1. Spritzeinheit, umfassend:
einen ersten Zylinder (20),
einen ersten beweglichen Abschnitt (22), der eine Gießmasse in dem ersten Zylinder (20) bewegt,
einen ersten Antriebsabschnitt (24), der den ersten beweglichen Abschnitt (22) betätigt,
einen zweiten Zylinder (30), dem die Gießmasse aus dem ersten Zylinder (20) zugeführt wird,
einen zweiten beweglichen Abschnitt (32), der die Gießmasse in dem zweiten Zylinder (30) bewegt,
einen zweiten Antriebsabschnitt (34), der den zweiten beweglichen Abschnitt (32) betätigt,
eine Düse (40), die die Gießmasse in eine Formeinheit einspritzt,
einen Umschaltabschnitt (50), der so ausgelegt ist, dass er in eine Position schaltet, in welcher der Umschaltabschnitt (50) sich sowohl zu dem ersten Zylinder (20), als auch zu dem zweiten Zylinder (30) als auch zu der Düse (40) hin öffnet,
eine Steuerung (70), die den ersten Antriebsabschnitt (24), den zweiten Antriebsabschnitt (34) und den Umschaltabschnitt (50) steuert,
**dadurch gekennzeichnet, dass** die Steuerung (70) so ausgelegt ist, dass sie den Umschaltabschnitt (50) in die genannte Position schaltet und den ersten Antriebsabschnitt (24) und den zweiten Antriebsabschnitt (34) gleichzeitig zu einer vorbestimmten Zeit betätigt.

2. Die Spritzeinheit nach Anspruch 1, worin die Steuerung so ausgelegt ist, dass sie den Umschaltabschnitt (50) zu dem ersten Zylinder (20), dem zweiten Zylinder (30), und der Düse (40) hin öffnet und dass sie die den ersten Antriebsabschnitt (24) und den zweiten Antriebsabschnitt (34) gleichzeitig zu einer vorbestimmten Zeit so betätigt, dass die Gießmasse dazu gebracht wird, gleichzeitig sowohl von dem ersten Zylinder (20) als auch von dem zweiten Zylinder (30) durch den Umschaltabschnitt (50) in die Düse (40) zu strömen.

3. Die Spritzeinheit nach Anspruch 1 oder 2, worin die Steuerung so ausgelegt ist, dass sie den Umschaltabschnitt (50) zu dem ersten Zylinder (20), dem zweiten Zylinder (30), und der Düse (40) hin öffnet und dass sie die den ersten Antriebsabschnitt (24) und den zweiten Antriebsabschnitt (34) gleichzeitig zu einer vorbestimmten Zeit so betätigt, dass die Gießmasse dazu gebracht wird, von der Düse (40) gleichzeitig sowohl in den ersten Zylinder (20) als auch in den zweiten Zylinder (30) durch den Umschaltabschnitt (50) zu strömen.

4. Spritzgießverfahren, umfassend:
Öffnen eines Umschaltabschnitts (50), der so ausgelegt ist, dass er in eine Position schaltet, in welcher der Umschaltabschnitt (50) sich sowohl zu dem ersten Zylinder (20), als auch zu einem zweiten Zylinder (30), dem die Gießmasse von dem ersten Zylinder (20) zugeführt wird, als auch zu einer Düse (40) hin öffnet, welche die Gießmasse in eine Formeinheit einspritzt,
**gekennzeichnet durch**
das gleichzeitige Betätigen eines ersten Antriebsabschnitts (24), der einen ersten beweglichen Abschnitt (22) betätigt, welcher die Gießmasse in dem ersten Zylinder (20) bewegt, und eines zweiten Antriebsabschnitts (34), der einen zweiten beweglichen Abschnitt (32) betätigt, welcher die Gießmasse in dem zweiten Zylinder (30) bewegt.

## Revendications

1. Unité d'injection comprenant :
un premier cylindre (20) ;
une première section mobile (22) qui déplace un matériau de moulage dans le premier cylindre (20) ;
une première section d'entraînement (24) qui actionne la première section mobile (22) ;
un second cylindre (30) auquel le matériau de moulage est amené à partir du premier cylindre (20) ;
une seconde section mobile (32) qui déplace le matériau de moulage dans le second cylindre (30) ;
une seconde section d'entraînement (34) qui actionne la seconde section mobile (32) ;
une buse (40) qui injecte le matériau de moulage dans l'unité de moule ;
une section de commutation (50) configurée pour passer dans une position dans laquelle la section de commutation (5) s'ouvre sur la totalité parmi le premier cylindre (20), le second cylindre (30) et la buse (40) ; et
un organe de commande (70) qui commande la première section d'entraînement (24), la seconde section d'entraînement (34) et la section de commutation (50),
**caractérisée en ce que** l'organe de commande (70) est configuré pour faire passer la section de commutation (50) dans ladite position et pour entraîner la première section d'entraînement (24) et la seconde section d'entraînement (34) en même temps, à un moment prédéterminé.

2. Unité d'injection selon la revendication 1, dans laquelle l'organe de commande est configuré pour ouvrir la section de commutation (50) sur le premier cylindre (20), le second cylindre (30) et la buse (40) et pour entraîner la première section d'entraînement (24) et la seconde section d'entraînement (34) en même temps, à un moment prédéterminé, de sorte que le matériau de moulage est amené à s'écouler en même temps à la fois à partir du premier cylindre (20) et du second cylindre (30) dans la buse (40) par la section de commutation (50).

3. Unité d'injection selon la revendication 1 ou 2, dans laquelle l'organe de commande est configuré pour ouvrir la section de commutation (50) sur le premier cylindre (20), le second cylindre (30) et la buse (40) et pour entraîner la première section d'entraînement (24) et la seconde section d'entraînement (34) en même temps, à un moment prédéterminé, de sorte que le matériau de moulage est amené à s'écouler à partir de la buse (40) à la fois dans le premier cylindre (20) et le second cylindre (30) au même moment par la section de commutation (50).

4. Procédé de moulage par injection comprenant les étapes consistant à :
ouvrir une section de commutation (50) configurée pour passer dans une position dans laquelle la section de commutation s'ouvre sur la totalité parmi un premier cylindre (20), un second cylindre (30) auquel le matériau de moulage est amené à partir du premier cylindre (20), et une buse (40) qui injecte le matériau de moulage dans l'unité de moule ;
**caractérisé par** l'étape consistant à :
entraîner une première section d'entraînement (24) qui actionne une première section mobile (22) qui déplace le matériau de moulage dans le premier cylindre (20), et une seconde section d'entraînement (34) qui actionne la seconde section mobile (32) qui déplace le matériau de moulage dans le second cylindre (30), en même temps.
